# EUROPEAN PATENT SPECIFICATION

(11) **EP 1 634 638 B1**
(45) Date of publication and mention of the grant of the patent: **19.10.2011**
(21) Application number: 05111298.5
(22) Date of filing: 25.06.2002
(51) Int. Cl.: B01D 53/94

(54) **Process of elimination of exhaust gas emissions**
Prozess zur Eliminierung von Abgasemissionen
Procédé pour l'élimination d'émissions de gaz d'échappement

(43) Date of publication of application: 15.03.2006
(62) Divisional of application: 02100748.9
(73) Proprietor: Ford Global Technologies, LLC, Dearborn, MI 48126 (US)
(72) Inventor: Chigapov, Albert N, 52072, Aachen (DE); Dubkov, Alexei A, 52064, Aachen (DE); Carberry, Brendan Patrick, 52072, Aachen (DE); Montreuil, Clifford Norman, 48154, Livonia (US); Graham, Georg Wade, 48105, An arbor (US); McCabe, Robert Walter, 48076, Lathrup Village (US); Chun, Woosang, 48170, Plymouth (US)
(74) Representative: von Kreisler Selting Werner

(56) References cited:
- EP-A- 0 888 816
- WO-A-98/28063

## Description

The present invention relates to a process using **a** regenerable catalyst composition suitable for entrapping SOₓ, and a Diesel oxidation catalyst (DOC) or a catalyzed soot filter (CSF) comprising said catalyst composition. Thus, the invention relates to the use of said catalyst composition substrate for adsorbing SOₓ as metal sulfate under lean (oxidative) conditions and desorbing accumulated sulfate as SO₂ under rich (reducing) conditions. This composition, further called as SOₓ trap, is designed to prevent sulfur poisoning of aftertreatment devices, especially NOₓ trap or NOₓ reduction catalyst and SOₓ trap mentioned works under typical operating conditions of NOₓ trap.

The invention in particular relates to an automotive aftertreatment process for elimination of exhaust gas emissions, basically for Diesel, Lean-Burn and Natural Gas fueling vehicles. The invention also relates to removal of SOₓ from stationary operating engines and in industry and power generation plants.

Sulfur oxides (SOₓ) have a negative effect on a performance of components of automotive catalysts and traps, such as noble metals, Ce-Zr oxide etc [T. J. Truex "Interaction of Sulfur with Automotive Catalysts and the Impact on Vehicle Emissions-A Review", SAE Technical Paper Services, 1999-01-1543, 1999, and referenced therein]. At present, one of the most challenging problems for Lean Burn gasoline and especially Diesel engines, having higher fuel efficiency, is removal of NOₓ toxic components. There is a lack of reductants for selective catalytic reduction of NOₓ to nitrogen for such kind of engines. The current 3-way catalysts cannot meet the requirements of newly developed engines with lean air/fuel region. The most promising way to solve this problem is NOₓ trap (NOₓ storage catalyst), having the ability to store NOₓ under oxidizing (lean) conditions and to reduce the stored NOₓ to N₂ under reducing (rich) conditions. This kind of system has been applied to lean-burn gasoline engines in Japan [K. Yamazaki, T. Suzuki, N. Takahashi, K. Yokota, M. Sugiura; Applied Catalysis B: 30 (2001) 459-468]. Toyota Motor Co announced the application of NOₓ trap containing system for Diesel engine vehicles starting in 2003 [J. L. Broge. Automotive Engineering International, October 2000, p. 119]. Unfortunately, the strong drawback of NOₓ trap is its intolerance to SOₓ compounds derived from sulfur in the fuel and lube oil, leading to gradual deterioration of its performance. While SO₂ is adsorbing relatively weak, sulfur dioxide can be easily oxidized to SO₃ on Pt catalyst. The last compound reacts with barium and/or other alkaline or alkaline-earth metal components of NOₓ trap, forming stable sulfates [S. Hodjati, P. Bernhardt, C. Petit, V. Pitchon, A. Kiennenmann "Removal of NOx: Part I. Sorption/desorption processes on barium aluminate", Applied Catalysis B. Environmental 19 (1998) 209-219]. Thermodynamically any metal sulfate is more stable than corresponding metal nitrate and decomposes at higher temperatures, thus there is a little chance to create any NOₓ trap having sulfur resistance, despite of numerous attempts. This problem is especially hard for Diesel engines due to the higher sulfur level in fuel in comparison with gasoline engines. Hence this technique can be used only for limited markets such as Japan where the sulfur content in gasoline and Diesel fuel is very low, but periodical desulfation of NOₓ trap is also required. The current strategy of periodical desulfation is to increase the temperature up to 600°-650°C under rich conditions. [U. Göbel, T. Kreuzer, E. Lox VDA Technical Congress, 1999, p. 319-332, S. Erkfeld, M. Larsson, H. Heldblom and M. Skoglundh, SAE 1999-01-3504], which is complex, requires high fuel penalty and special control management strategy and in addition leads to gradual thermal deactivation of NOₓ trap.

One of the possible solutions to avoid sulfur poisoning of the NOₓ trap or DeNOₓ catalyst is to place the SOₓ storage material upstream of NOₓ trap [S. Detterbeck; P. Mueller and M. Preis, Ger. Offen. DE 19,753,573 (CI. F01N3/20), 10 June 1999, Appl. 03. Dec. 1997; T Nakatsuiji, R. Yasukawa, K. Tabata, K. Ueda and M. Niwa. Chem. Lett. 1998, (10), 1029]. According to operation conditions of the NOₓ traps, SOₓ storing material should be able to collect SO₂ under lean conditions in the temperature window of the NOₓ trap (normally 300 - 450°C [J. S. Hepburn, E. T. Thanasiu, D. A. Dobson, W. L Watkins, "Experimental and Modeling Investigations on NOx Trap Performance", SAE Technical Paper Series. 962051, 1996]), and to be regenerated under conditions that are safe for the NOₓ trapping material. Under rich (reducing conditions) SO₂ is not expected to be a poison for the NOₓ trap [M.A. Dearth, J.S. Hepburn, E. Thanasiu, J. McKenzie, G. Scott Home "Sulfur interaction with lean NOx Traps: Laboratory and Engine dynamometer studies", SAE Technical Paper Series, 982592 1998 9 pp.; P. Engstrom, A. Amberntsson, M. Skoglundh, E. Fridell, G. Smedler "Sulphur dioxide interaction with NOx storage catalyst", App. Catal. B., 22 (1999) L241-L248; O. H., D. Dou and M. Moliner, SAE 2000-01-1205], taking into account also the elevated temperatures during rich excursions which are favorable for SO₂ desorption and further that NOₓ trap is full of adsorbed NOₓ at the moment of SO₂ release, that prevents SO₂ adsorption on NOₓ trap material.

Copper, iron, and manganese containing systems were, historically, the first materials proposed for reversible SOₓ removal from flue- and other industrial waste gases. Early studies [R. F. Vogel, B. R. Mitchell, F. E. Massoth "Reactivity of SO2 with supported metal oxide-alumina sorbents", Environ. Sci. Technol., 8, No. 5 (1974) 432-436; M. H. Cho, W. K. Lee "SO2 removal by CuO on γ-alumina", J. Chem. Eng. Japan, 16, No. 2 (1983)127-131; J. H. A. Kiel, W. Prins, W. P. M. van Swaaij "Flue gas desulfurization in a gas-solid trickle flow reactor with a regenerable sorbent", in: Gas Separation Technology (ed. E. F. Vansant, R. Dewolfs), Elsevier, Amsterdam, 1991, 539-548] have shown that copper oxide-based sorbents (typically, 5% Cu on a support) have the best sorption-regeneration characteristics for applications at around 350-400 °C. Copper containing systems displayed reasonable stability in multi-cycle processes, including tolerance to water vapors and over-heating. Those systems are still in use for high-temperature SOₓ removal from flue gases, basically Cu/Al₂O₃ and more recently Cu-CeO₂ [Yoo K. etc. Ind. Eng. Chem. Res., v. 33, 7 (1994), p. 1786, J. F. Akyurtlu, A. Akyurtlu, Chem. Eng. Sci., 54 (15-16) 2191-2197 (1999), H. W. Pennline, Fuel & Energy Abstracts, 38 (1997), N3, p. 187, Centi G., Perothoner S., Developments in Chem. Eng. & Mineral Processing, 8 (2000), N5-6, p. 441, Wang Z. Industrial & Eng. Chem. Research, 37 (1998), N12, p. 4675, Jeong S., Kim S., Industrial and Eng. Chem. Research, 39 (200), N6, p. 1911].

Recently, a number of other materials were proposed and studied for that purpose, including Pt-CeO₂-ZrO₂ and Pt-CeO₂ [F. M. Allen, S. Khairulin, T. J. Zega, R. J. Farrauto "Reusable SOx traps: Materials and methods for regeneration", AlChE Meeting, Nov. 15-20, 1998, Miami, FL; Section 4-3, p. 84-5], MgAl₂₋ₓFeₓO₄ [J. Wang, Z. Zhu, C. Li "Pathway of the cycle between the oxidative adsorption of SO2 and the reductive decomposition of sulfate on the MgAl2-xFexO4 catalyst", J. Mol. Catal., 139 (1999) 31-41], MgAl₂O₄ [M. Waqif, O. Saur, J. C. Lavalley, Y. Wang, B. Morrow "Evaluation of magnesium aluminate spinel as a sulfur dioxide transfer catalyst", Appl. Catal., 71 (1991) 319-331], Co-Mg-Al mixed oxides [A. E. Palomares, J. M. Lopez-Nieto, F. J. Lazaro, A. Lopez, A. Corma "Reactivity in the removal of SO2 and NOx on Co/Mg/Al mixed oxides derived from hydrotalcites", Appl. Catal. B., 20 (1999) 257-266], Cu-CeO₂ [3. F. Akyurtlu, A. Akyurtlu, Chem. Eng. Sci., 54 (15-16) 2191-2197 (1999)].

Dual-functional systems containing components for oxidizing SO₂ to SO₃, namely Pt, and SOₓ- storing components selected from Ti, Zr, Sn, Fe, Ni, Ag and Zn oxides are described [K. Okuide, O. Kuroda, T. Yamashita, R. Doi, T. Ogawa, M. Fujitani, H. Lizuka, Sh. Azukibata, Yu. Kitahara and N. Shinotsuka. Jpn. Kokai Tokyo Koho JP 11 169, 708 [99 169,708] (Cl. B01J23/42), 29 June 1999, Appl. 1997/344,682, 15 Dec. 1997]. These systems operate in two periodic steps, consisting of an operation under oxidizing conditions and a far shorter operation under reducing conditions.

The references are recent and not numerous on applications of SOₓ traps and SOₓ sorbents for automotive aftertreatment.

Authors from Engelhard [F. M. Allen, S. Khairulin, T. J. Zega, R. J. Farrauto "Reusable SOx traps: Materials and methods for regeneration", AlChE Meeting, Nov. 15-20, 1998, Miami, FL; Section 4-3, p. 84-5] mentioned the possible use of Pt-CeO₂-ZrO₂ and Pt-CeO₂ for mobile applications. Degussa [Automotive Engineering/February 1997, p. 133] tried to use Pd-Ba sulfur traps, but with only partial success. ASEG Manufacturing [O. H. Bailey, D. Dou and M. Moliner, Sulfur traps for NOx adsorbers, SAE 2000-01-1205] tested different sulfur traps without any indication of composition. Sakai Chemical [T. Nakatsuji, R. Yasukawa, K. Tabata etc. Highly durable NOx reduction system. SAE 980932] claimed Ag/Al₂O₃ as effective SOₓ trap material. Goal Line [SAE 2000-01-1012, 2000-01-1932, 1999-01-2890, 1999-01-3557] issued 4 publications on sulfur sorbate materials and traps without indication of their compositions, except it contains Pt.

US-Patent 5,472,673 relates to SOₓ adsorbents selected from alkali, alkali-earth, rare earth metals, in addition containing Pt. Those compositions cannot be regenerated under NOₓ trap temperature limits, so it requires the separate mode of operation under high temperatures; these materials can work as only irreversible SOₓ traps. Any Pt containing adsorbents are also not acceptable due to the H₂S release under rich conditions, as one can see below.

US-Patent 5,473,890 refers to SOₓ absorbent containing at least one member selected from copper, iron, manganese, nickel, sodium, tin, titanium, lithium and titania. In addition Pt is used for SOₓ adsorbent. Authors did not show any example of the performance of such absorbents. The carrier is made of alumina. In this case, it is clarified that the adsorbent carrying lithium Li on the carrier made of alumina is most preferred.

US-Patent 5,687,565 claims a very complex oxide composition, designed for gasoline applications with high temperature of regeneration of SOₓ trap material and not designed to prevent the poisoning of NOₓ trap, so it can be related to irreversible trap material. Any their composition contains alkaline-earth oxides (Mg, Ca, Sr, Ba) or Zn. The mentioned Cu only can promote the basic formulations. In addition, they used a small amount of noble metals (Ru, Os, Pd, Pt etc.).

WO 98/28063A1 discloses a method for treating exhaust gas of internal combustion engines.

EP 0888816A1 discloses an exhaust gas purification catalyst and a waste gas purification method.

US-Patent 5,792,436 applies the sorbents containing alkaline earth metal oxides of Mg, Ca, Sr, Ba in combination with oxides of cerium, Pr and group of oxides of elements of atomic numbers from 22 to 29 inclusive. Pt is in service for all adsorbents. Cu and Pr is mentioned without any real examples and only in combination with other elements, for example Pt. The regeneration temperatures for SOₓ removal are high.

Those prior art systems were developed basically for the removal of SOₓ from stationary systems and industry, while the reversible SOₓ storage for vehicles and especially for NOₓ traps demands the new special requirements for SOₓ trap development and another solutions in comparison with SOₓ removal in industrial applications.

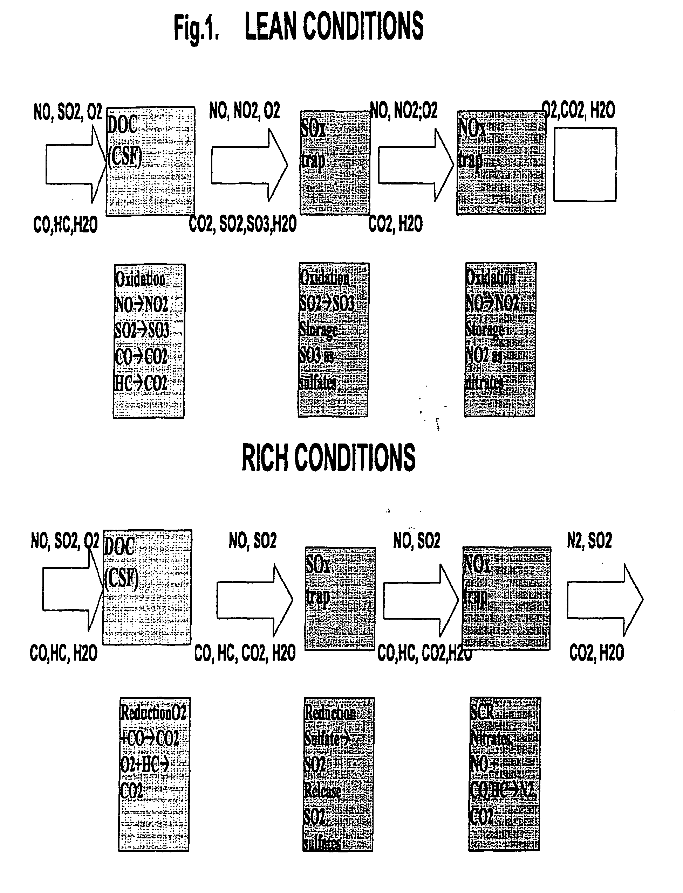

For the development of SOₓ trap first it is necessary to evaluate the basic requirements to SOₓ trap to operate, see Figure 1.

For successful application the SOₓ trap has to do the following:
- To prevent the poisoning of NOₓ trap by complete removal of SOₓ upstream of NOₓ trap accumulating SOₓ as sulfates on the surface of storage material at wide temperature range under lean conditions.
- To decrease the temperature of desulfation to NOₓ temperature operating limits under rich conditions.
- To eliminate the thermal deactivation of NOₓ trap due to the low temperature of desulfation.
- To synchronize the desulfation and NOₓ reduction events under rich conditions, that leads to more simple control management.
- To allow the NOₓ trap to operate with constant activity in continuous mode without gradual decrease of activity between desulfation steps.
- To use the higher sulfur level fuel.
- To prevent the formation of sulfated ash.

Based on that, the following main criteria have been taken into account to evaluate the materials as candidates for SOₓ storage material:
- High adsorption rate and SOₓ adsorption capacity at wide temperature range (200-500°C) under lean conditions.
- Thermal stability of sulfates accumulated up to 600°C under lean conditions.
- Complete removal of SOₓ at wide temperature range under lean conditions.
- High activity of SO₂ oxidation to SO₃ is desirable. If oxidation catalyst (DOC) or catalyzed soot filter (CSF) capable to oxidize SO₂ to SO₃ is installed upstream of SOₓ trap, such requirement is not mandatory.
- The lower temperature of SO₂ release as possible under rich conditions.
- The narrow temperature range of SO₂ release under rich conditions.
- The only SO₂ release under rich conditions to prevent H₂S slip above the smell threshold level.
- Low cost, convenient method of preparation, opportunity to deposit on monolith, and good thermal stability.

For material selection, the following considerations have been taken into account. It is well known that the only oxides of Si, B, and P having an acid nature, and some oxides like WO₃, MoO₃, Re₂O₇, where the metal is in high valence state, do not form sulfates at all on the surface, while other oxides having basic sites form sulfates on the surface. Among them, the oxides that contain an alkali or alkaline earth metals are able to desorb sulfates only at extremely high temperatures above 1000 °C, and the sulfates tend to be desorbed only at 550-650 °C or higher even under reducing environment. Therefore such oxides would be impossible to use as regenerable SOₓ traps. From other side, the oxides with a weak basic adsorption sites do not have a good affinity to SOₓ compounds. From this point of view, the oxides containing moderate basic sites look most promising as a material for SOₓ traps. Although silica does not form sulfates, it may be used as a support taking into account the high surface area of silica and silica probably may decrease the temperature of SOₓ desorption. The same considerations can be applied for alumina and titania, having relatively weak basic properties, for its use as supports for more active SOₓ capturing material. The transition metal oxides have a low surface area and should be deposited on support for their application in adsorption. So we decided to study the SOₓ adsorption-desorption properties of the wide group of oxides having different basicity including some binary and ternary systems to evaluate them as candidates for SOₓ traps. In addition we studied the effect of Pt, known as most effective catalyst for oxidation SO₂ to SO₃ [T. R. Felthouse, D. A. Berkel, S. R. Jost, E. L. McGrew, A. Vavere Platinum-Catalyzed Sulfur Dioxide Oxidation Revisited, in: Advanced Catalysts and Nanostructured Materials - Modern Synthetic Methods, (W. R. Moser Ed.), Academic Press, San Diego-London-Boston-New York-Sydney-Tokyo-Toronto, 1996, p. 91-115], and for reduction of SOₓ species in hydrogen [P. Bazin, O. Saur, J. C. Lavalley, G. Blanchard, V. Visciglio, O. Touret "Influence of platinum on ceria sulfation", Appl. Catal. B. 13 (1997), 265-274], on performance of trap materials studied. Cu and Fe containing zeolites, known as active SCR catalysts, were also tested.

The present invention is devoted to the development of regenerable SOₓ trap for Diesel and lean-burn gasoline automotive applications. That SOₓ trap will be designed to prevent the sulfur poisoning of automotive catalysts and especially NOₓ traps, while installed upstream of those devices. The SOₓ trap should remove and accumulate sulfur compounds on its surface at wide temperature range under lean conditions, thus preventing the sulfur poisoning, while it should easy release sulfur compounds as SO₂ at low temperatures as possible under short periods of rich (reducing) conditions. The noble metal components of NOₓ trap cannot oxidize under rich conditions and cannot accumulate sulfur as metal sulfates, while SO₂ is weakly adsorbed, especially at elevated temperatures and easy removes under rich conditions.

It should facilitate the automotive catalysts and NOₓ traps to operate in continuous mode at lower temperatures using high-level sulfur containing fuels. The trap should allow synchronizing the desulfation and NOₓ reduction events under rich conditions. To develop this idea, the different materials have been tested as promising candidates for SOₓ trap materials.

For irreversible SOₓ trap, which can collect SOₓ under lean conditions and can be regenerated only at elevated temperatures in a separate mode of operation, the systems containing praseodymia, zirconia-praseodymia and mixed Mn-yttria were found to be an appropriate material.

Such SOₓ trap could be installed upstream of NOₓ trap and preferably downstream of Diesel oxidation catalyst (DOC) or catalyzed soot filter (CSF) to provide high effectiveness of SOₓ removal. The other possible positioning of SOₓ trap includes impregnating of DOC and/or CSF with SOₓ trap material, or SOₓ trap material can be applied to CSF together with NOₓ trap material.

A first embodiment of the present invention is directed to a process of elimination of exhaust gas emissions, including the step of
a) entrapping SOₓ on a platinum group metal free (PGM-free) regenerable catalyst composition containing praseodymia, zirconia-praseodymia and mixed manganese-yttria by adsorbing SOₓ as metal sulfate at a temperature in the range of 200°C to 500°C under lean (oxidative) conditions and
b) desulfation (regeneration) by desorbing metal sulfates at a temperature in the range of 600°C to 650°C under rich (reducing) conditions.

The above referenced catalyst composition may be applied as a part of Diesel oxidation catalyst (DOC) or catalyzed soot filter (CSF). Generally, said catalyst composition substrate should be installed upstream of a NOₓ trap, in particular downstream of said DOC or CSF respectively.

### Examples:

### Materials

A commercial silica gel purchased from Aldrich^{®} (Silica gel for column Chromatography 70-230 mesh, pores of 60 Å) and calcined at 800 °C for 2h was used for all experiments.

For all materials prepared on silica, the original 70-230 mesh size samples were used for TG experiments and TPR-MS runs.

ZrO₂, CeO₂, Pr₆O₁₁, and double oxides CeZr 1:1 (molar ratio), CePr 1:1, ZrPr 1:1, Cu and Ag-containing binary systems with ceria, zirconia, india, magnesia, zinc, yttria and copper oxide, Mn-yttria were prepared by cellulose templating method, using Whatman^{®} 542 filter paper as cellulose material. The detailed procedure is described elsewhere [A. N. Shigapov, G. W. Graham, R. W. McCabe, US Patent 6,139,814, Oct. 31, 2000]. Briefly, a cellulose material was impregnated with 0.1-0.2 M solution of precursor nitrate salts (zirconium dinitrate oxide in case of zirconia) in water with the following drying at room temperature overnight and combustion of cellulose material at 800 °C for 2h.

Pt-loaded Zr, Ce, and Pr single and binary oxides were prepared by the same procedure described above for Pt- (Zr-SiO₂) system. Pt loading was equal to 1 wt% for all systems tested, except Pt-CeZr and Pt-CePr (2 wt% Pt).

All samples were used for TGA experiments as obtained.

Alumina-titania mixed supports, alumina, and titania were prepared by modified sol-gel method including fast hydrolysis in excess of boiling water of metal alkoxides followed by drying and calcination [C. N Montreuil and M. Chattha, US Patent 5,922,294]. Samples were calcined at 600°C and at 800°C.

1 wt % Pt on Al-Ti, Al₂O₃ and TiO₂ samples were prepared from a corresponding Al-Ti sample by impregnation of a support with H₂PtCl₆ solution followed by calcination, and Pt reduction in 5%H₂-N₂ for 3h at 400°C.

The sample Ti-Al (8:1) was prepared by the modified sol-gel method using impregnation of filter paper with alcohol solution of metal alkoxides followed by drying and calcinations at 600°C or 800°C. The support thus obtained was impregnated with the solution of copper nitrate. Cu/alumina samples were prepared by impregnation of commercial γ-alumina, Brockmann acidic S=155 m²/g, with copper nitrate with the following drying and calcinations at 600°C.

FeZSM5-30 sample was prepared from 80-wt% of HZSM-5 (SiO₂: Al₂O₃ = 30 (mol)) (Zeolyst Co.) and 20-wt% of a binder (Al₂O₃ sol). The material was then ion exchanged with Fe to an atomic ratio Fe/Al = 1.0. Calculated Fe content was 0.78 mmol Fe/g of a sample. Particles of 35-60-mesh size were used in the TG experiments.

FeZSM5-50, CuZSM5 and CuMgZSM5 zeolite samples. The detailed procedure is described elsewhere [A.V. Kucherov, A. N. Shigapov, A. A. Ivanov and M. Shelef. J. Catal., 186, 334-344 (1999)]. Iron or copper concentration was of 0.5 wt% Fe or Cu in ZSM-5 type zeolite (SiO₂: Al₂O₃ = 50). Zeolite sample was pressed into pellets, calcined for 2 h at 540°C followed by crushing and sieving. CuMgZSM5 had Cu concentration of 0.5 wt% and Mg concentration of 0.7 wt%.

Particles of 100/120-mesh size were used in the TG experiments except for CuZSM5 having particles less then 0.5 mm.

The BET surface area of samples studied is presented in Table 2 and 3.

Samples loading of 20-60 mg were typically used for the TG measurements.

### Methods

### Surface area and porosity

Texture properties of samples were studied by nitrogen adsorption-desorption at -196 °C using a Micromeritics ASAP 2400 instrument. The samples were outgassed at 350 °C for 2h prior to measurements.

### XRD analysis

XRD measurements of materials tested were carried out using a Scintag^{®}X1 diffractometer with Cu Kα radiation on powdered samples packed into a 1 mm-deep cavity in a zero-background quartz sample holder.

### Thermogravimetric (TG) experiments

Experiments were performed using a setup based on the Cahn^{®} 2000 microbalance operating in a flow mode. Helium UHP (100 sccm) was used to purge the microbalance chamber.

A conventional flow setup was used for gas mixtures preparation. All gases were of ultra high purity or certified calibration mixtures. Nitrogen and oxygen were additionally purified using standard columns with molecular sieves. Matheson^{®} MF controllers were used to maintain the flow rates.

Quartz reaction vessel of tube-in-tube and side inlet/outlet design was used in the experiments performed with quartz suspensions and pans for the samples. The reaction gases (nitrogen, SO₂, hydrogen-argon mixture) entered the reaction vessel through the side inlet, heated by passing through the tube-in-tube zone, and directed upstream passing the sample. Far above the sample location, the reaction gas met with purge helium, and both gases exited the reaction vessel through the side outlet. Thermocouple was mounted in the special quartz tube inside the reaction vessel, positioned as close as possible to a sample pan. This temperature was assumed as a "sample temperature".

Standard sulfation gas of the following composition was used: 800 ppm SO₂, 10% O₂; nitrogen - balance. Flow rates of 50 to 150 sccm were used for different runs. Nitrogen UHP with flow rates of 50-150 sccm was used during isothermal desorption (purge) or TPD (50 sccm only) of the SOₓ formed. Certified mixture of 1000 ppm SO₂ in nitrogen was used as SO₂ supply of the reaction gas. 10% H₂ in Ar mixture from a cylinder was used for the rich (reducing) experiments with flow rate of 50 sccm.

Tests included the following treatments:
1. Pretreatment in 10%O₂-N₂, flow 55 sccm; fast heating of the sample from room temperature to 200°C; then temperature-programmed heating (10°C/min) from 200 to 700°C; holding sample for 10 min at 700°C; cooling to 500°C.
2. 1hour-SOₓ uptake tests at 500 °C using gas containing 800 ppm SO₂, 10%vol. O₂ in nitrogen (standard SOₓ gas mixture) with flow rate of 50 sccm).
3. SOₓ isothermal desorption test at 500 °C h was performed in nitrogen flow of 50 sccm for 0.5h after the sulfation.
4. TPD (SOₓ thermal stability test) in the temperature interval of 500-700 °C with heating rate of 5 °C/min.
5. TPR (SOₓ and extra-species reducibility test) in the temperature interval of 200-700 °C, with heating rate of 5 °C/min, and using 10% vol. H₂ in Ar (50 sccm) as the reducing agent.
6. 1hour-SOₓ uptake tests at 200 °C using the standard SOₓ gas mixture followed by:
7. Temperature-Programmed Sulfation (TPS) test (all in the standard SOₓ gas mixture); temperature-programmed heating (1 °C/min) from 200 to 615 °C, holding 30 min at 615 °C, then cooling to 150-200 °C.

TG data were collected using the Rustrak^{®} Ranger II Data Logger.

TPR-MS measurements of the sulfated samples.

The samples were sulfated overnight at 500 °C using the standard sulfation gas. Reduction of the materials was studied by temperature-programmed reduction (TPR) measurements carried out with an Altamira Instruments' AMI-1 system employing a thermal conductivity detector (TCD). The standard pretreatment of samples involved the heating of the powder sample (typical loading of 50 mg, although for some samples only 15 mg were available) at 500°C for one hour in a flowing mixture of 10% oxygen in helium at the rate of 25 cc/min. to ensure full oxidation. The sample was then cooled to 30°C in the same gas flow. The cooled sample is then purged with Ar prior to the introduction of reduction mixture. After switching to reduction gas (9.4 % H₂ in He) at flow rate of 25 cc/min, TPR experiment was attained by temperature ramp of the sample from 30°C to 900°C at the rate of 15°C/min and sampling the effluent gas from the AMI-1 into the Traspector-CIS₂ System mass spectrometer with electron multiplier (EM) from Leybold^{®} Inficon Inc.

### Results

### Supports (Oxides of non-transition metals)

SOₓ-related properties of a number of the single and binary oxides are presented in Table 1. Oxides are given in the order of increasing their basic properties (according to [Y. Moro-oka, Catal. Today, 45 (1998) 3-12]). There is an obvious trend of increasing SO₂ capture ability with the increase of the basicity of the material.

**Table 1:**

| Dependence of the SOₓ trap properties of different oxides on their basicity. Basicity tends to increase downwards. | | | | | |
|---|---|---|---|---|---|
| Oxide | SOₓ loading at 200 °C, mg/g | SOₓ loading at 500 °C, mg/g | SOₓ loading at 500 °C, mg/m² | Temperature of 50% thermal desorption, °C | Temperature of 50% reduction, °C |
| SiO₂ | - | 2.5 | 0.006 | 670 | 490 |
| Zr-SiO₂ | 0.32 | 1.0 | 0.0025 | 635 | 470 |
| TiO₂ | 2.3 | 3.0 | 0.12 | >615 | 555 |
| ZrO₂ | 6.3 | 8.8 | 0.14 | >700 | 555 |
| Al-Ti 1:8 | 2.4 | 2.2 | 0.047 | 683 | 500 |
| Al-Ti 1:3 | 3.6 | 2.2 | 0.032 | 763 | 515 |
| Al-Ti 1:1 | 5.0 | 1.7 | 0.018 | 791 | 540 |
| Al-Ti 3:1 | 4.6 | 2.3 | 0.018 | 782 | 515 |
| Al₂O₃ | 12.7 | 9.5 | 0.066 | >800 | 580 |
| CeZr 1:1 | 12 | 36 | 0.28 | 675 | 550 |
| ZrPr 1:1 | 24 | 31 | 0.34 | >>700 | 660 |
| CeO₂ | 3.1 | 30 | 0.28 | 695 | 590 |
| CePr 1:1 | 3.6 | 39 | 0.42 | >>700 | 675 |
| Y₂O₃ | 3.1 | 48 | 0.43 | >700 | 605 |
| Pr₆O₁₁ | 15 | 60 | 1.54 | >700 | 675 |

The most basic oxides (downwards from Al₂O₃), as a rule, are very effective in SO₂ removal. Some of them (ZrPr and Pr₆O₁₁) are effective both at 200°C and 500°C. The less basic oxides (SiO₂, TiO₂, ZrO₂; Al₂O₃) exhibit lower SOₓ capacities (per weight, and per specific area). At 200°C, only ZrPr and Pr₆O₁₁ have SOₓ capacity (per area) that is significantly higher than for the other materials. For practical application, the adsorption capacities per weight of the material are more important. In this respect, the oxides of Al₂O₃, CeZr, ZrPr, Y₂O₃ and especially Pr₆O₁₁ are the most effective for SOₓ removal. Analysis of the results obtained for binary (CeZr, ZrPr) oxides has shown that zirconium addition increases the removal of SOₓ at 200°C. For CeZr mixed oxide, the SOₓ capacity of the binary oxide is higher than that of the individual oxides (CeO₂ and ZrO₂).

Thermal stability of the sulfates on all oxides studied is high enough; none of them is decomposed at temperatures lower than 615°C. The reduction characteristics of the sulfates are basically in the agreement with literature data reviewed in [A. Pieplu, O. Saur, J.-C. Lavalley "Claus Catalysis and H2S selective oxidation", Catal. Rev.-Sci. Eng., 40 (4) 409-450 (1998)]. The temperature of reduction of sulfates increases with the increase of basic properties of the corresponding oxide. Sulfates formed on moderately basic oxides can be reduced and released at 470°C (Zr-SiO₂) - 550°C (zirconia, titania). The sulfates accumulated on more basic oxides can be regenerated only at 550 - 670°C. These temperatures are too high for automotive applications. The more basic oxides, such as La₂O₃, MgO have even higher temperatures of SOₓ release upon reduction.

Obviously, there is no material, which is suitable as reversible SOₓ trap. Rare earth-based oxides have too high temperature of SOₓ reductive release (desulfation), while less basic oxides cannot capture SOₓ from exhaust gases.

***Pt-containing adsorbents*** The main properties of materials containing platinum are summarized in Table 2.

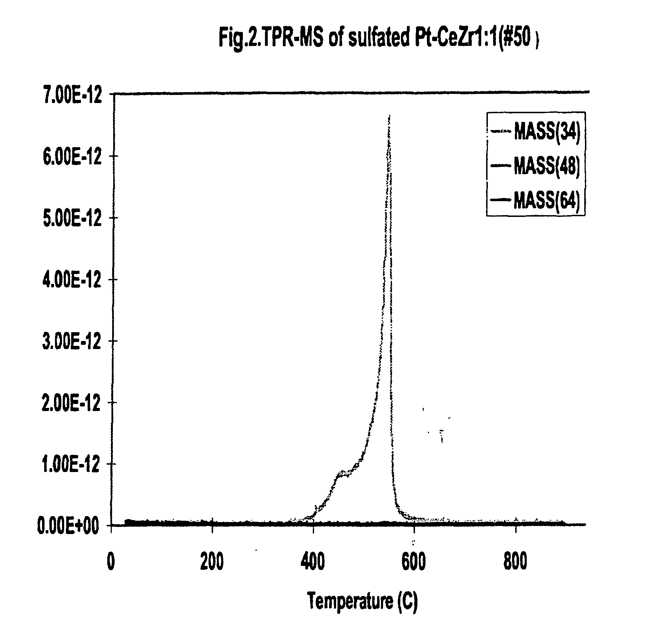

As a rule, Pt addition leads to increased SOₓ capacity, especially at 200 °C, Pt is effective catalyst of SO₂ oxidation to SO₃ and accordingly, facilitates the sulfate formation on the material. From this point of view, the adsorption capacity at 200 °C is as a rule, lower than at 500 °C and reflects more the oxidative ability of material, than true adsorption capacity, while the most of materials studied are effective in SO₂ oxidation at 500 °C. As a rule, platinum addition lowers the temperature of the sulfation light-off (SLOT), the SLOT decrease was not observed only for Pr₆Oii, which is highly active itself at 200 °C and Cu-(Zr-SiO₂). For other systems, from 30 to 285 °C shift to lower temperature is observed. The reductive release of SOₓ on Pt-containing systems is also usually shifted to lower temperature. Pt facilitates the reduction of sulfates and their removal from the surface of material. From these points of view, the Pt-containing systems look very attractive as SOₓ trap, but the mass spectral analysis of the reductive regeneration products using the TPR-MS runs revealed the formation of H₂S as a main product. For the most active Pt-containing materials, Pt/CeO₂-ZrO₂, H₂S was the only product, see Figure 2. Pt promotes the deep reduction of the sulfates accumulated to H₂S. As an example, the fraction of H₂S was 21% on CeZr(1:1) mixed oxide, but the addition of Pt led to 100% selectivity to H₂S.

The fraction of H₂S was 35% for the best case, Pt/CeO₂. H₂S formation cannot be accepted for automotive applications, so the application of Pt-containing system as SOₓ trap material faces the problem. Therefore, the better option is to use Pt in Diesel oxidation catalyst formulations upstream of SOₓ trap to catalyze SO₂ oxidation to SO₃ under lean conditions, while non-platinum SOₓ trapping material will capture SO₃ as sulfate. From this point of view, the better to use the supports for Diesel Oxidation Catalyst (DOC) with low SOₓ capacity, e.g. Pt/TiO₂, see Table 2.

To resume, the Pt-containing materials are also not suitable for SOₓ trap.

**Table 2: SOₓ trap properties of Pt-containing different oxides.**

| Sample | S(BET), m²/g | SOₓ Loading, mg/g | | Desorbed 500°C N₂ | Desorbed in N₂ at T: | | | Reduced in H₂/Ar at T: | | | Sulfation light-off T (SLOT),°C |
|---|---|---|---|---|---|---|---|---|---|---|---|
| | | after 1h of sulfation | | | | | | | | | |
| | | 200°C | 500°C | | 10% | 50% | 90% | 10% | 50% | 90% | |
| | | | | | | | | | | | |
| Cu- PtZrSiO₂ | 373 | 1.75 | 22 | 22.5 | 540 | 610 | 690 | 215 | 245 | 340 | 375 |
| Pt-TiO₂ 600°C | 26 | 15.6 | 15.9 | NA | 572 | 718 | NA | 277 | 356 | 499 | |
| Pt-Al:Ti 1:3 800°C | 69 | 12.6 | 19.4 | 17.3 | 552 | 645 | 767 | 284 | 361 | 605 | 270 |
| Pt-Al:Ti 1:8 800°C | 47 | 25 | 16.2 | 18.6 | 553 | 642 | 764 | 278 | 364 | 540 | 200 |
| Fe-tZrSiO₂ | 389 | 5 | 13.3 | 13.6 | 550 | 655 | >700 | 315 | 365 | NA | 220 |
| Pt-Al:Ti 1:1 800°C | 92 | 31.5 | 27.3 | 11.8 | 563 | 667 | 793 | 299 | 378 | 565 | 230 |
| Pt-Al:Ti 3:1 800°C | 129 | 41 | 32.8 | 11.6 | 548 | 655 | >800 | 328 | 414 | 551 | 225 |
| Pt-CeO₂ | 106 | 14.3 | 30 | 1.4 | 635 | 690 | >700 | 80 | 455 | 520 | 200 |
| Pt-ZrO₂ | 63 | 13.2 | 18 | 6.6 | 590 | >700 | >>700 | 325 | 462 | 595 | 200 |
| Pt-CeZr 1:1 | 91 | 51 | 71 | 4.6 | 580 | 670 | >700 | 405 | 483 | 530 | 200 |
| Pt-CePr 1:1 | 93 | 1.25 | 79 | 0 | >700 | >>700 | >>> 700 | 425 | 490 | 546 | 390 |
| Pt-Al₂O₃ 800°C | 144 | 22.7 | 38.2 | 3.9 | >607 | 764 | >800 | 432 | 500 | 674 | 380 |
| Mn- PtZrSiO₂ | 402 | 9.3 | 34 | 3.1 | 627 | >700 | >>700 | 370 | 517 | 587 | 200 |
| Pt-Pr₆O₁₁ | 39 | 19.6 | 59 | NA | > 700 | >>700 | >>>700 | NA | 615 | NA | 500 |
| Pt-Cordierite | 0.5 | 0.36 | 1 | NA | NA | NA | NA | NA | NA | NA | NA |
| Pt-TiO₂800°C | 1 | 0.19 | 2.2 | 0 | 596 | 690 | 798 | NA | NA | NA | 280 |

| | | | | | | | | | | | |
|---|---|---|---|---|---|---|---|---|---|---|---|
| NA- data non-available | | | | | | | | | | | |

### Transition metal oxides unsupported

The adsorption capacity of transition metal oxides (Cu, Zn, Cr, Mn, Co, Ni, Fe) and Ag was quite low, and for the best sample of CuO did not exceed 11 mg/g at 500°C due to the low surface area. Obviously, the supported transition metals oxides will be more preferable. Among the oxides studied, only on copper oxide and silver the temperature of SOₓ desorption under reducing conditions was low, namely the temperature of 50% release was 410°C for CuO, and 420°C for Ag, while for iron oxide was near 500°C. The temperature of 50% release was too high, exceeding 550°C for other transition oxides studied, in the range of 565-610°C. Based on these results, we focused basically on Cu-containing systems, taking into account also that the TPR-MS run revealed the formation of only SO₂ under reduction of sulfated CuO.

### Non-Pt supported materials and supports

A summary of the most important properties of oxide systems, including supported transition metals are given in Table 3, the materials with low SOₓ capacity are not included.

Among the SOₓ-storage material candidates, the copper containing materials have revealed the best properties, especially Cu-SiO₂ and Cu-Zr-SiO₂. Among other systems studied, there was no material with satisfactory properties. Fe and Ag containing systems had lower adsorption capacity and higher H₂S fraction release, especially Fe, under reductive conditions. Transition metals supported on zeolites, had good releasing properties and good adsorption properties at low temperature of 200°C, but low adsorption capacity, in addition these systems were not stable under operating conditions with irreversible deactivation. Mn, Co, Pr containing systems had the good properties in SOₓ removal even at 200°C and high adsorption capacity, but formed too stable sulfates. These systems can be however applied for irreversible SOₓ trap, as will be discussed below. Ti and Zr oxides had a low adsorption capacity and high fraction of H₂S, while Y and Ce oxides required the high temperature for regeneration of sulfates collected.

**Table 3: SOₓ trap properties of non-Pt supported materials.**

| Sample | S(BET) | SOₓ Loading, mg/g after 1h of sulfation: | | Desorbed 500°C N₂ | Desorbed in N₂ at T: | | | Reduced in H₂/Ar at T | | | Sulfation |
|---|---|---|---|---|---|---|---|---|---|---|---|
| | | | | | | | | | | | Light-off T |
| | m²/g | 200°C | 500°C | 0.5h, % | 10% | 50% | 90% | 10% | 50% | 90% | (SLOT), °C |
| Cu₀.₀₃-ZrSiO₂(0.97) | 374 | 1.7 | 13.5 | 14.8 | 545 | 620 | 700 | 235 | 265 | 330 | 370 |
| Cu_{0.03}-SiO₂(0.97) | 444 | 0.8 | 12 | 11.9 | 550 | 615 | 685 | 241 | 267 | 314 | 380 |
| Cu_{0.25}⁻ ZrSiO₂(0.75) | 294 | 3.3 | 104 | NA | 563 | 645 | >700 | 242 | 275 | 327 | 355 |
| Cu_{0.1}-SiO₂(0.9) | 368 | 0.5 | 62 | NA | 572 | 625 | 670 | 235 | 280 | 337 | 350 |
| Cu_{0.25}SiO₂(0.75) | 235 | 1.1 | 97 | NA | 570 | 633 | NA | 260 | 282 | 302 | 360 |
| Cu_{0.5}La_{0.5} | 6 | 2.9 | 13 | NA | 568 | >700 | NA | 250 | 297 | 635 | 330 |
| Cu_{0.5}-Ti-Al(8:1) | 131 | 1.9 | 138 | NA | 612 | 700 | >700 | 277 | 323 | 378 | 360 |
| Cu_{0.15}Y_{0.85} | 76 | 1.3 | 97 | NA | NA | NA | NA | 296 | 328 | 622 | 405 |
| Cu_{0.5}Y_{0.5} | 52 | 2.2 | 69 | NA | 580 | 678 | >700 | 295 | 330 | 635 | 385 |
| Cu_{0.5}Ce_{0.5} | 12 | 0.6 | 33 | NA | 655 | 700 | >700 | 300 | 335 | 637 | 390 |
| cu-ZSM₅ | 423 | 3 | 5.5 | 5.1 | 540 | 660 | >700 | 280 | 340 | 465 | 260 |
| Cu_{0.25}-Al₂O₃(0.75) | 110 | 5.5 | 78 | NA | 607 | >700 | NA | 317 | 340 | 387 | 380 |
| Cu_{0.5}Mg_{0.5} | 29 | 4.1 | 36 | NA | 540 | >700 | NA | 312 | 342 | 606 | 397 |
| Cu_{0.15}Zr_{0.85} | 37 | 4.4 | 40 | 6 | 80 | 616 | 680 | 320 | 346 | 380 | 370 |
| Cu_{0.5}In_{0.5} | 42 | 0.2 | 89 | NA | 555 | 605 | >700 | 305 | 353 | 412 | 390 |
| Cu_{0.5}Zr_{0.5} | 28 | 6.2 | 69 | NA | 572 | 600 | 653 | 342 | 365 | 407 | 392 |
| Mg-SiO₂ | 440 | 0.95 | 0.5 | 0 | 590 | 690 | >700 | 275 | 390 | 570 | 200 |
| Fe-ZrSiO₂ | 378 | 1.3 | 3.3 | 5.6 | 670 | >700 | >700 | NA | 400 | NA | 250 |
| CuO | 11 | 0.1 | 14 | NA | 597 | 650 | >700 | 368 | 411 | 509 | 425 |
| Fe-ZSM₅₋₅₀ | ~400 | | 7.9 | 13.6 | 550 | 638 | >700 | 335 | 418 | 660 | 200 |
| Fe-ZSM₅₋₃₀ | ~400 | 6.6 | 15.5 | 4.4 | 615 | >700 | >700 | 380 | 430 | 480 | 200 |
| 10%Zr-SiO₂ | 400 | 0.32 | 1 | 9 | 535 | 635 | >700 | 290 | 470 | 510 | 390 |
| SiO₂ | 387 | 0 | 2.5 | NA | 585 | 670 | >700 | 315 | 490 | 670 | NA |
| Al:Ti 1:8 800°C | 47 | 2.4 | 2.2 | 2 | 594 | 683 | 767 | 453 | 500 | 569 | 430 |
| Al:Ti 3:1 800°C | 129 | 4.6 | 2.3 | 0 | 670 | 782 | >800 | 474 | 515 | 726 | 510 |
| Al:Ti 1:3 800°C | 69 | 3.6 | 2.2 | 0 | 692 | 763 | ~800 | 486 | 517 | 544 | 500 |
| Cu,Mg-ZSM₅ | 360 | 7 | 16 | 3.4 | 650 | >700 | >700 | 395 | 535 | 670 | 260 |
| Cu_{0.5}Zn_{0.5} | 12 | 0.2 | 70 | NA | 555 | 600 | 690 | 420 | 538 | 585 | 404 |
| Ag_{0.15}Ce_{0.85} | 36 | 2.7 | 66 | 0 | 680 | >700 | >>700 | 378 | 540 | 614 | 390 |
| Cu_{0.15}Ce_{0.85} | 71 | 1.4 | 105 | 0.5 | 670 | 695 | >700 | 480 | 540 | 570 | 440 |
| Al:Ti 1:1 800°C | 92 | 5.0 | 1.7 | 0 | 702 | 791 | >800 | 510 | 542 | 642 | 510 |
| CeZr 1:1 | 129 | 12 | 36 | 1.5 | 620 | 675 | >700 | 500 | 550 | 570 | 330 |
| ZrO₂ | 63 | 6.3 | 8.8 | 1.6 | 635 | >700 | NA | 520 | 555 | 600 | 440 |
| TiO₂ 600°C | 26 | 2.3 | 3 | 1 | 615 | NA | NA | 500 | 556 | 574 | NA |
| Ce-SiO₂ | 408 | 0.4 | 4 | 1.5 | 615 | 674 | >700 | 470 | 574 | 612 | NA |
| Al₂O₃ 800°C | 144 | 12.7 | 9.5 | 2.1 | 700 | >800 | >800 | 517 | 582 | 715 | 660 |
| CeO₂ | 106 | 3.1 | 30 | 1.2 | 670 | 695 | >700 | 580 | 590 | 615 | 440 |
| Y₂O₃ | 112 | 3.1 | 48 | NA | >700 | NA | NA | 575 | 605 | 645 | 420 |
| Ag_{0.3}La_{0.7}MnOₓ | 58 | 2.6 | 18 | NA | 690 | >700 | NA | 413 | 615 | 651 | 370 |
| Co_{0.15}Ce_{0.85} | 96 | 0.4 | 11 | NA | >700 | NA | NA | 580 | 619 | 640 | 385 |
| ZrPr 1:1 | 90 | 24.4 | 31 | 1.35 | >700 | >>700 | >>>700 | 595 | 660 | NA | 200 |
| Pr₆O₁₁ | 39 | 15.2 | 60 | 0 | 583 | >700 | >>700 | 583 | 675 | >700 | 500 |
| CePr 1:1 | 93 | 3.6 | 39 | 1.24 | >700 | >>700 | >>>700 | 643 | 677 | 688 | 500 |
| Mn_{0.15}Y_{0.85} | 134 | 4.3 | 202 | NA | >700 | NA | NA | 640 | 692 | 772 | 413 |

| | | | | | | | | | | | |
|---|---|---|---|---|---|---|---|---|---|---|---|
| NA-non-available | | | | | | | | | | | |

### Irreversible SOₓ traps (invention)

The term "irreversible trap" means that a trap cannot be regenerated at typical temperature range of NOₓ trap operation at 300-450°C. So the desulfation (regeneration) of this trap requires the separate mode of operation, e.g. it will be necessary to raise temperature under rich conditions. Such traps are less attractive than reversible traps, nevertheless such traps would get an advantage before current NOₓ trap technology, because it will prevent sulfur poisoning of NOₓ trap between desulfation events. As the results, the NOₓ trap performance will not be deteriorated, while desulfation can be done at the same mode as current desulfation strategy, by rising temperature to 600-650°C under rich conditions for 10-20 minutes. Such traps are also valuable for SOₓ removal from stationary engines, industry and power plants, when the traps may be desulfated even at lean conditions. From this point of view, the candidate material for irreversible trap must have a high SOₓ storage capacity at 200-500°C. From materials tested, see Table 3, Pr₆O₁₁ and mixed PrZr oxides show the good properties, comparable at low temperature of 200°C even with Pt-containing materials, see Table 2. Taking into account the disadvantages of Pt catalysts, namely high cost, irreversible poisoning by components of exhaust gases, especially in industry and power plants, H₂S release under reducing conditions, see Figure 2, these praseodymia-based systems have a potential for such applications. Mn-Y mixed oxide has revealed a highest adsorption capacity, but it was less active in desulfation at low temperature and required higher temperature of desulfation, see Table 3.

## Claims

1. Process of elimination of exhaust gas emissions, including the step of
a) entrapping SOₓ on a platinum group metal free (PGM-free) regenerable catalyst composition containing praseodymia, zirconia-praseodymia and mixed manganese-yttria by adsorbing SOₓ as metal sulfate at a temperature in the range of 200 °C to 500 °C under lean (oxidative) conditions and
b) **desulfation** (regeneration) by desorbing metal sulfates at a temperature in the range of 600 °C to 650 °C under rich (reducing) conditions.

2. The process according to claim 1, **characterized in that** the catalyst composition is comprised in a diesel oxidation catalyst (DOC).

3. The process according to claim 2, **characterized in that** the catalyst composition is installed upstream of a NOₓ trap.

4. The process according to claim 1, **characterized in that** the catalyst composition is comprised in a catalyzed soot filter (CSF).

5. The process of claim 4, whereby the catalyst composition is installed upstream of a NOₓ trap.

## Patentansprüche

1. Verfahren zur Beseitigung von Abgasemissionen, umfassend den Schritt des
a) Einfangens von SOₓ an einer Platingruppenmetallfreien (PGM-freien) regenerierbaren Katalysatorzusammensetzung, die Praseodymoxid, Zirconiumoxid-Praseodymoxid und gemischtes Mangan-Yttriumoxid enthält, durch Adsorbieren von SOₓ als Metallsulfat bei einer Temperatur im Bereich von 200 °C bis 500 °C unter mageren (oxidativen) Bedingungen und
b) die Desulfatierung (Regeneration) durch Desorbieren von Metallsulfaten bei einer Temperatur im Bereich von 600 °C bis 650 °C unter fetten (reduzierenden) Bedingungen.

2. Verfahren gemäß Anspruch 1, **dadurch gekennzeichnet, dass** die Katalysatorzusammensetzung in einem Diesel-Oxidationskatalysator (DOC) enthalten ist.

3. Verfahren gemäß Anspruch 2, **dadurch gekennzeichnet, dass** die Katalysatorzusammensetzung einer NOₓ-Falle vorgeschaltet ist.

4. Verfahren gemäß Anspruch 1, **dadurch gekennzeichnet, dass** die Katalysatorzusammensetzung in einem katalytischen Rußfilter (CSF) enthalten ist.

5. Verfahren gemäß Anspruch 4, wobei die Katalysatorzusammensetzung einer NOₓ-Falle vorgeschaltet ist.

## Revendications

1. Procédé pour l'élimination des émissions de gaz d'échappement, comprenant les étapes consistant à
a) piéger du SOₓ sur une composition de catalyseur régénérable exempt de métaux du groupe du platine (exempt de MGP) et contenant de l'oxyde de praséodyme, du zircone-oxyde de praséodyme et du manganèse-oxyde d'yttrium mixte par l'adsorption de SOₓ sous forme de sulfate métallique dans une gamme de température allant de 200 °C à 500 °C dans des conditions pauvres (oxydatives) ; et
b) désulfurer (régénérer) par désorber des sulfates métalliques dans une gamme de température allant de 600 °C à 650 °C dans des conditions riches (réductrices).

2. Procédé selon la revendication 1, **caractérisé en ce que** la composition de catalyseur est comprise dans un catalyseur d'oxydation pour gasoil (DOC).

3. Procédé selon la revendication 2, **caractérisé en ce que** la composition de catalyseur est installée en amont d'un piège de NOₓ.

4. Procédé selon la revendication 1, **caractérisé en ce que** la composition de catalyseur est comprise dans un filtre de suie à catalyseur (CSF).

5. Procédé selon la revendication 4, dans lequel la composition de catalyseur est installée en amont d'un piège de NOₓ.
